# EUROPÄISCHE PATENTANMELDUNG

(11) **EP 4 109 040 A2**
(43) Veröffentlichungstag der Anmeldung: **28.12.2022**
(21) Anmeldenummer: 22170399.4
(22) Anmeldetag: 28.04.2022
(51) Int. Cl.: G01B 11/25

(54) **VORRICHTUNG UND VERFAHREN ZUR OPTISCHEN ANALYSE EINER OBERFLÄCHE**

(30) Priorität: 21.06.2021 DE 102021206336
(71) Anmelder: Robert Bosch GmbH, 70442 Stuttgart (DE)
(72) Erfinder: Lange, Oliver, 30966 Hemmingen (DE); Herzog, Paul Robert, 31137 Hildesheim (DE); Simon, Stephan, 31079 Sibbesse (DE)

(57) **Zusammenfassung**

Es werden eine Vorrichtung sowie ein Verfahren zur optischen Analyse einer Oberfläche (4) vorgeschlagen. Das Verfahren umfasst die Schritte: Projizieren einer ersten Vielzahl punktsymmetrischer Muster (8) auf die Oberfläche (4), optisches Erfassen der Projektion (5) mittels eines optischen Sensors (3) zur Erstellung erster Daten und Analysieren einer Beschaffenheit der Oberfläche (4) anhand der ersten Daten.

## Beschreibung

### Stand der Technik

Die vorliegende Erfindung betrifft eine Vorrichtung sowie ein Verfahren zur optischen Analyse einer Oberfläche. Insbesondere betrifft die vorliegende Erfindung Verbesserungen bei der Vorbereitung der Oberfläche zur optischen Analyse.

Zum Beispiel auf dem Gebiet der Verformungsanalyse und Schwingungsanalyse im Zuge der Auslegung und der Qualitätskontrolle von Bauteilen, werden optische Analysen der dynamischen Oberflächenvorgänge vorgeschlagen.

DE 10 2020 214 248 beschreibt ein Verfahren zur Verformungsanalyse, bei welchem punktsymmetrische Strukturen auf der zu analysierenden Oberfläche mittels eines optischen Sensors erfasst werden. Anhand der Sensordaten werden die Positionen und Ausrichtungen der punktsymmetrischen Strukturen über der Zeit festgestellt und somit Rückschlüsse auf die Verformung der Oberfläche gezogen.

### Offenbarung der Erfindung

Gemäß einem ersten Aspekt wird ein Verfahren zur optischen Analyse einer Oberfläche vorgeschlagen. Die Oberfläche kann beispielsweise eine ebene und/oder gewölbte und/oder unebene Oberfläche sein. Sie wird im Zuge des erfindungsgemäßen Verfahrens bezüglich ihrer Gestalt bzw. über der Zeit veränderlicher Gestalt analysiert. Mit anderen Worten soll durch das erfindungsgemäße Verfahren festgestellt werden, wie der Verlauf der Oberfläche über Raum und gegebenenfalls über der Zeit ist. In einem ersten Schritt wird hierzu eine erste Vielzahl punktsymmetrischer Muster auf die Oberfläche projiziert. Mit anderen Worten wird eine elektromagnetische Strahlung auf das Bauteil oder die Struktur geschickt, welche von der Oberfläche reflektiert wird. Die Vielzahl punktsymmetrischer Muster beschreibt hierbei eine Vielzahl von Mustern, welche jeweils in sich eine Punktsymmetrie zumindest bezüglich einzelner Bestandteile aufweisen. Insbesondere sind sämtliche Merkmale dieser Muster punktsymmetrisch bezüglich eines (gemeinsamen) Symmetriepunktes ausgestaltet. Insbesondere liegt der Symmetriepunkt im Mittelpunkt des jeweiligen Musters der Vielzahl punktsymmetrischer Muster. Das Projizieren kann beispielsweise mittels eines Lasers, einer LED, mittels eines Scheinwerfers, mittels eine Projektors (Beamers), o.ä., erfolgen. Die Muster sind optional zueinander abgegrenzt und somit ggf. optisch voneinander räumlich getrennt. Auf diese Weise können die jeweiligen Muster optisch erfasst und separiert zueinander ausgewertet werden. Verständlicherweise kann die Punktsymmetrie in Abhängigkeit der Oberfläche gestört werden. Als "punktsymmetrisches Muster" wird daher im Sprachgebrauch der vorliegenden Offenbarung ein solches Muster verstanden, welches sich bei Projektion auf eine ideal ebene Oberfläche bei senkrechter Projektion ergeben würde. Dies schließt nicht aus, dass alternativ oder zusätzlich im Zuge des erfindungsgemäßen Verfahrens auch eine Vorverzerrung bei der Projektion dafür Sorge tragen kann, dass auf der zu analysierenden Oberfläche ein im Wesentlichen punktsymmetrisches Muster erscheint. Es sind also in dem vom Projektor ausgestrahlten Licht Informationen enthalten, welche eine punktsymmetrische Projektion ergeben, sofern die zu analysierende Oberfläche bestimmte Randbedingungen erfüllt. In einem zweiten Schritt wird die Projektion der Vielzahl punktsymmetrischer Muster oder zumindest die Projektion eines einzigen punktsymmetrischen Musters mittels eines optischen Sensors zur Erstellung erster Daten erfasst. Mit anderen Worten wird beispielsweise ein 2D-3D-Sensor verwendet, um eine von der zu analysierenden Oberfläche zurückgeworfene optische Signatur der punktsymmetrischen Muster zu empfangen und in elektrische Signale zu wandeln. Diese können anschließend hinsichtlich der Form des projizierten punktsymmetrischen Musters bzw. hinsichtlich der projizierten ersten Vielzahl punktsymmetrischer Muster untersucht werden und Aufschluss darüber geben, wie die Oberfläche zum Zeitpunkt der optischen Erfassung geformt war. Hierzu kann beispielsweise eine vordefinierte Referenz, insbesondere repräsentierend die für die Projektion verwendeten Daten, mit den ersten Daten verglichen werden. Das Verhältnis der ersten Daten zu den für die Projektion verwendeten Daten gibt somit Auskunft über die Beschaffenheit der Oberfläche. Unter der Beschaffenheit der Oberfläche kann unter anderem, insbesondere zeitlich aufgelöst, die Lage, die Form, eine Ausrichtung im Raum, eine Abmessung und/oder eine etwaige Bewegung der Oberfläche verstanden werden. Gegenüber dem Stand der Technik ist es somit nicht mehr erforderlich, eine materielle (gegenständliche) Markierung auf die Oberfläche aufzubringen, wie sie im Stand der Technik beispielsweise durch Folie, Farbe, Materialbearbeitung, o.ä., zu erzeugen war. Die optische Analyse einer Oberfläche kann somit unabhängig von einer dauerhaften Markierung der Oberfläche oder das Erfordernis eines Bildschirms in der Oberfläche einfach gestaltet werden. Insbesondere kann durch das erfindungsgemäße Verfahren eine Vielzahl Oberflächen, welche sich im Projektionsbereich und Erfassungsbereich des optischen Sensors zeitlich aufeinanderfolgend befinden, analysiert werden. Abhängig vom Ergebnis der Analyse kann optional ein Ausgabesignal erzeugt, ausgegeben und/oder bereitgestellt werden, mit welchem ein Aktor angesteuert wird, um die Oberfläche beispielsweise relativ zu der Projektion zu bewegen.

Die Unteransprüche zeigen bevorzugte Weiterbildungen der Erfindung.

In der Vielzahl punktsymmetrischer Muster kann das erste punktsymmetrische Muster mehrfach enthalten sein. Mit anderen Worten kann sich das erste punktsymmetrische Muster innerhalb der Vielzahl punktsymmetrischer Muster im Wesentlichen wiederholen. Hierbei kann eine Kennzeichnung des einen Musters gegenüber anderen ähnlichen bzw. substantiell ansonsten identischen Mustern eine Verwechslungsgefahr bzw. eine doppeldeutige Kennzeichnung der Oberfläche verhindern. Dies kann insbesondere regelmäßig (eindimensional oder zweidimensional, insbesondere matrixförmig) erfolgen. Hierbei können die punktsymmetrischen Muster unmittelbar aneinandergrenzen oder einen (insbesondere regelmäßigen) Abstand zueinander aufweisen. Alternativ oder zusätzlich können auch zweite punktsymmetrische Muster in der Vielzahl punktsymmetrischer Muster enthalten sein, welche sich von der optischen Erscheinung des ersten punktsymmetrischen Musters unterscheiden. Entsprechend können auch noch mehr unterschiedliche, insbesondere sämtliche punktsymmetrische Muster voneinander unterschiedlich sein. Beispielsweise können sie eine andere Form, andere Konturen, andere Intensitäten, andere Formen oder Farben, etc., aufweisen. Insbesondere kann das punktsymmetrische Muster eine kreisförmige sowie eine polygonförmige, insbesondere eine sechseckige oder quadratische äußere Begrenzungslinie aufweisen. Auf diese Weise kann eine vollständige Punktsymmetrie sichergestellt werden, welche einfach zu erkennen und daher einfach auszuwerten ist. Insbesondere kann eine etwaige Ellipsenform des projizierten punktsymmetrischen Musters darauf hinweisen, dass sich die Oberfläche in einem vordefinierten Winkel zum Projektor und/oder zum optischen Sensor befindet. Die kreisförmige äußere Begrenzungslinie schließt nicht aus, dass innerhalb des punktsymmetrischen Musters weitere Merkmale enthalten sind, welche insbesondere eine Punktsymmetrie bezüglich des Mittelpunktes des punktsymmetrischen Musters aufweisen. Eine Punktsymmetrie im Sinne der vorliegenden Offenbarung schließt eine gerade und eine ungerade Punktsymmetrie ein. Während eine gerade Punktsymmetrie durch ein identisches Kontrastverhältnis der punktsymmetrisch zueinander angeordneten Merkmale bezeichnet, ist eine ungerade Punktsymmetrie dann gegeben, wenn Merkmale durch entgegengesetzte Kontrastverhältnisse in Original und im Spiegelbild abgebildet werden.

Bevorzugt können sämtliche Merkmale und/oder Linien des projizierten punktsymmetrischen Musters eine Punktsymmetrie bezüglich eines gemeinsamen Symmetriepunktes aufweisen. Diese Merkmale und/oder Linien können beispielsweise durch Kontrastsprünge, insbesondere durch unterschiedliche Wellenlängen und/oder unterschiedliche Intensitäten, realisiert werden. Wichtig bezüglich der Merkmale ist lediglich die mittels des optischen Sensors erkennbare und datentechnisch repräsentierbare Gestalt.

Das punktsymmetrische Muster kann eine verrauschte optische Erscheinung aufweisen. Derartige Muster werden auch als "Rauschmuster" bezeichnet. Mit anderen Worten sind die optischen Eigenschaften für das menschliche Auge nicht unmittelbar erkennbar, da sie zufällig anmuten. Für eine sensorische Auswertung enthalten die Rauschmuster hingegen besagte Merkmale eines punktsymmetrischen Musters. Beispielsweise kann ein punktsymmetrisches Rauschmuster erzeugt werden, indem man die obere Hälfte einer quadratischen Matrix mit unabhängigen Zufallswerten, z.B. als Grauwerte, füllt und die untere Hälfte der Matrix mit dem im Mittelpunkt der Matrix punktgespiegelten Werten der oberen Hälfte. Für eine gerade Punktsymmetrie würden die Werte bei der Spiegelung von oben nach unten übernommen. Für eine ungerade Punktsymmetrie würden die Werte während der Übernahme von oben nach unten in ihrem Wertebereich umgekehrt werden, z.B. so, aus hellgrau wird dunkelgrau und aus schwarz wird weiß. Die so erzeugte Rauschmuster-Matrix kann dann z.B. mit Hilfe eines Projektors auf eine Oberfläche projiziert werden. Auf diese Weise wird der menschliche Beobachter die Punktsymmetrie nicht als solche wahrnehmen und daher nicht auf Informationen aufmerksam, welche für ihn (gegebenenfalls) keine Relevanz aufweisen. Insbesondere kann das jeweilige Rauschmuster auch so in der Umgebung (den Zwischenräumen zwischen den jeweiligen punktsymmetrischen Mustern) untergehen, dass der menschliche Betrachter die punktsymmetrischen Muster überhaupt nicht erkennt. Insbesondere können sie eine identische mittlere Intensität wie die sie umgebende Projektion/Oberfläche aufweisen und ohne jegliche erkennbaren Merkmale für das menschliche Auge auskommen. Auf diese Weise kann der menschliche Betrachter das Vorhandensein der Vielzahl punktsymmetrischer Muster ohne maschinelle Hilfsmittel nicht mühelos feststellen. Er kann die Projektion somit auch nicht als optischen Makel ausmachen oder sich durch diese gestört fühlen.

Bevorzugt kann das Verfahren weitergebildet werden, indem auch eine zweite Vielzahl punktsymmetrischer Muster auf die Oberfläche projiziert wird. Dies kann zeitgleich oder zeitlich nachfolgend auf das Projizieren der ersten Vielzahl punktsymmetrischer Muster erfolgen. Die zweite Vielzahl punktsymmetrischer Muster kann sich hinsichtlich der punktsymmetrischen Muster und/oder hinsichtlich der Positionen und/oder Ausrichtungen gegenüber der ersten Vielzahl punktsymmetrischer Muster unterscheiden. Grundsätzlich können die erste Vielzahl punktsymmetrischer Muster und die zweite Vielzahl punktsymmetrischer Muster auch eine identische Erscheinung aufweisen und lediglich zeitversetzt zueinander projiziert werden. Insbesondere kann die Projektion der ersten Vielzahl beendet werden, bevor die Projektion der zweiten Vielzahl beginnt. In entsprechender Weise wird auch die Projektion der zweiten Vielzahl punktsymmetrischer Muster mittels desselben optischen Sensors zur Erstellung von zweiten Daten optisch erfasst. Auch die zweiten Daten können nun bei der Analyse der Beschaffenheit der Oberfläche Berücksichtigung finden. Insbesondere kann ein zweiter Projektor verwendet werden, um die zweite Vielzahl zu projizieren. Beispielsweise kann der zweite Projektor eine andere Frequenz, eine andere Intensität oder eine andere Perspektive/Ausrichtung bezüglich der Oberfläche aufweisen, als der erste Projektor. Auf diese Weise kann sichergestellt werden, dass zumindest eine Vielzahl punktsymmetrischer Muster mittels des Sensors erkannt wird, wenn die Bedingungen zur optischen Erfassung der anderen Vielzahl punktsymmetrischer Muster für den optischen Sensor (zeitweise) nicht möglich sind. Insbesondere aber ist durch das zeitlich aufeinanderfolgende Projizieren und die optische Erfassung eine Analyse der Beschaffenheit der Oberfläche über der Zeit und somit die Analyse dynamischer Vorgänge auf/im/bezüglich der Oberfläche möglich.

Die Projektion der punktsymmetrischen Muster kann insbesondere dann Vorteile mit sich bringen, wenn eine zeitveränderliche Projektion gewährleistet ist. In einem ersten Schritt kann hierzu ein zu codierender Datensatz ermittelt werden, dessen Informationen vom Projektor an den optischen Sensor geliefert werden sollen. Diese Datenübertragung kann sozusagen in der Projektion erfolgen bzw. in der Projektion versteckt werden. Insbesondere sind die zu codierenden Daten nicht als Bestandteil der Formen an sich zu sehen, sondern in einer optischen Veränderung der zeitlich aufeinanderfolgend projizierten punktsymmetrischen Muster codiert. Es wird also die erste Vielzahl punktsymmetrischer Muster und - sofern verwendet - auch die zweite Vielzahl punktsymmetrischer Muster optisch entsprechend der zu codierenden Daten über der Zeit verändert. Insbesondere können die erste Vielzahl und die zweite Vielzahl punktsymmetrischer Muster die zu codierenden Daten jeweils übertragen, um unabhängig von den vorgenannten, für die optische Erkennung der Projektion mittels des Sensors ungünstigen Bedingungen zu sein. Alternativ kann über der Zeit der Unterschied zwischen der ersten Vielzahl und der zweiten Vielzahl punktsymmetrischer Muster verwendet werden, um die zu codierenden Daten zu codieren. Selbstverständlich können dritte, vierte, fünfte und weitere Vielzahlen punktsymmetrischer Muster auf die erste und zweite Vielzahl folgen, welche sich von der ersten Vielzahl und der zweiten Vielzahl punktsymmetrischer Muster unterscheiden und sich zudem insbesondere auch voneinander unterscheiden.

Die zu codierenden Daten können beispielsweise einen Speicherplatz bzw. eine Speicheradresse betreffen, unter welcher das jeweilige punktsymmetrische Muster oder die Vielzahl punktsymmetrischer Muster datentechnisch repräsentiert sind. Entsprechend kann eine Referenz zur Verwendung bei der Analyse durch die zu codierenden Daten gekennzeichnet werden. Diese Informationen können empfängerseitig bzw. dem optischen Sensor nachgeschaltet verwendet werden, um die Analyse der Oberflächenbeschaffenheit zu unterstützen.

Die Analyse der Beschaffenheit der Oberfläche anhand der ersten Daten kann weitere Schritte umfassen. Beispielsweise kann zunächst die Symmetrie in der ersten Vielzahl punktsymmetrischer Muster erkannt werden. Hierzu wird eine Auswertung der vom optischen Sensor empfangenen Daten vorgenommen und die Punktsymmetrie gesucht. Dies kann beispielsweise verwendet werden, um den Mittelpunkt des punktsymmetrischen Musters zu lokalisieren und somit das punktsymmetrische Muster zu lokalisieren. Über die Kenntnis der Punktsymmetrie einzelner Merkmale kann nun die Ausrichtung bzw. die räumliche Lage der punktsymmetrischen Muster auf der Oberfläche ermittelt werden. Mit anderen Worten wird in Abhängigkeit der Symmetrie auch eine Ermittlung einer der ersten Vielzahl punktsymmetrischer Muster zugeordneten Referenz möglich. Diese kann im weiteren Verlauf der Analyse der Beschaffenheit der Oberfläche verwendet werden.

Die erste Vielzahl punktsymmetrischer Muster kann beispielsweise mittels einer statischen Maske nach Art einer Blende oder eines Dias vor dem Projektor bzw. als Bestandteil des Projektors erzeugt werden. Die statische Maske kann die Intensität und die Frequenzbereiche der Projektion derart beeinflussen, dass die punktsymmetrischen Muster der ersten Vielzahl bzw. der zweiten Vielzahl sensorisch erkennbar werden. Alternativ oder zusätzlich kann eine zeitveränderliche Maske nach Art einer Matrix-Blende, eines Bildsensors oder CMOS-Sensors oder CCD-Sensors oder nach Art eines Beamers erzeugt werden, wodurch die o.g. Möglichkeiten zur Anpassung der Projektionseigenschaften und Reaktion auf geänderte Randbedingungen ermöglicht werden.

Um die Vielzahl punktsymmetrischer Muster in geeigneter Weise mittels des optischen Sensors erfassen und auswerten zu können, kann zunächst eine räumliche Erstreckung und/oder Lage der Oberfläche bezüglich des Sensors und/oder bezüglich des Projektors ermittelt werden. Sofern vordefinierte Randbedingungen erfüllt bzw. nicht erfüllt sind, kann die Projektion zur Erzeugung der ersten Vielzahl punktsymmetrischer Muster auf der Oberfläche vorverzerrt werden. Beispielsweise kann eine nicht-senkrechte Ausrichtung der Oberfläche bezüglich der Projektionsachse dadurch kompensiert werden, dass der Projektor eine Vorverzerrung des in seinem Licht enthaltenen punktsymmetrischen Musters vornimmt und auf der Oberfläche eine durch den optischen Sensor besonders gut erfassbare optische Signatur in Form eines (tatsächlich) punktsymmetrischen Musters bzw. einer Vielzahl punktsymmetrischer Muster erscheint. Somit können Kenntnisse über die Vorverzerrung und die ersten Daten zur Analyse der Beschaffenheit der Oberfläche herangezogen werden, obwohl der Projektor und/oder der optische Sensor eine nicht ideale Grundausrichtung bezüglich der Oberfläche aufweist bzw. aufweisen.

Das für die Projektion verwendete Licht kann im sichtbaren Spektrum, Infrarotspektrum oder im ultravioletten Spektrum liegen. Auch Kombinationen aus den vorgenannten Spektralbereichen sind möglich. Insbesondere können schmalbandige Spektren oder ein einziges schmalbandiges Spektrum (insbesondere monochromes Licht) verwendet werden, um je nach Anwendungsfall gewünschte Eigenschaften aufzuweisen oder Störungen von Mensch und Technik zu vermeiden. Insbesondere ein schmalbandiges Spektrum z.B. in einem Bereich außerhalb des Sonnenlichts kann vorteilhaft sein, um Interferenzen mit der Sonneneinstrahlung (tags wie nachts) zu vermeiden.

Bevorzugt kann das Verfahren weitergebildet werden, indem eine vordefinierte und/oder eine veränderte Länge einer Projektionsstrecke (also der Abstand zwischen dem Projektor und der Oberfläche) ermittelt wird. Dies kann beispielsweise insbesondere dann auftreten, wenn das erfindungsgemäße Verfahren in einem Fahrzeug und/oder mit einer beweglichen Oberfläche ausgeführt wird. Alternativ oder zusätzlich kann eine veränderte Umgebungslichtintensität festgestellt werden, welche beispielsweise eine optische Erfassung des projizierten punktsymmetrischen Musters vereitelt oder erschwert. Im Ansprechen auf eines der vorgenannten Ereignisse oder eine Kombination beider vorgenannter Ereignisse kann eine Detailtiefe (z.B. die Vielzahl enthaltener Informationen/Formen/Details) der Projektion der ersten Vielzahl punktsymmetrischer Muster und/oder eine für die Projektion aufgewandte Energie angepasst werden. Somit kann stets sichergestellt werden, dass durch veränderte Umgebungsbedingungen die optische Erfassung und die sich anschließende Analyse der Beschaffenheit der Oberfläche nicht vereitelt werden bzw. die Projektion und die optische Erfassung derselben hinsichtlich Rechenleistung und Energie in einem geeigneten Arbeitsbereich ablaufen.

Die Projektion kann beispielsweise durch eine Verkehrsinfrastruktureinrichtung (z.B. eine Straßenbeleuchtung (z.B. Laterne)) oder durch ein Fortbewegungsmittel (z.B. ein Fahrzeug, nämlich ein PKW, ein Transporter, ein LKW, ein Motorrad, ein Luft- und/oder Wasserfahrzeug) ausgeführt werden. Alternativ oder zusätzlich kann der optische Sensor an einer Verkehrsinfrastruktureinrichtung (z.B. eine Straßenbeleuchtung (z.B. Laterne)) oder an einem Fortbewegungsmittel (z.B. ein Fahrzeug, nämlich ein PKW, ein Transporter, ein LKW, ein Motorrad, ein Luft- und/oder Wasserfahrzeug) angeordnet sein. Auf diese Weise kann ein Fahrzeug, ein Fortbewegungsmittel, ein fahrendes Arbeitsmittel, o.ä., entweder durch das erfindungsgemäße Verfahren erfasst werden oder das Fortbewegungsmittel bzw. Arbeitsmittel selbstständig durch Ausführung des erfindungsgemäßen Verfahrens in die Lage versetzt werden, Oberflächen in der Umgebung zu untersuchen / zu analysieren.

Gemäß einem zweiten Aspekt der vorliegenden Erfindung wird eine Vorrichtung vorgeschlagen, welche einen Projektor, einen optischen Sensor und eine Auswerteeinheit aufweist. Mittels der vorgenannten Merkmale ist die Vorrichtung eingerichtet, ein Verfahren nach einem der vorstehenden Ansprüche auszuführen. Die Vorrichtung kann beispielsweise an einem Fortbewegungsmittel, an einer Arbeitsmaschine oder stationär befestigt sein. Sie kann durch die Ausführung des erfindungsgemäßen Verfahrens das Vorhandensein einer Oberfläche (bzw. eines Gegenstandes) oder dessen Entfernung und Form/Gestalt-Änderung erfassen oder die Oberfläche sogar vermessen bzw. über der Zeit kartografieren. Die Merkmale, Merkmalskombinationen und die sich aus diesen ergebenden Vorteile des erfindungsgemäßen Verfahrens entsprechen derart ersichtlich denjenigen, welche mittels der erfindungsgemäßen Vorrichtung erzielt werden können, dass zur Vermeidung von Wiederholungen auf die obigen Ausführungen verwiesen wird.

Mit dem Unterschied, dass in der vorliegenden Offenbarung die Vielzahl punktsymmetrischer Muster auf die Oberfläche projiziert wird, anstatt wie in der eingangs genannten DE 10 2020 214 248 eine gegenständliche (z.B. stoffliche) Markierung der Oberfläche durch punktsymmetrische Muster vorzunehmen, können sämtliche dort gezeigte Merkmale in entsprechender Weise auf den vorliegend offenbarten Gegenstand angewendet werden, wozu die Offenbarung durch Bezugnahme aufgenommen wird.

Zusätzlich zu den genannten Vorteilen in der Patentanmeldung DE 10 2020 214 248 ergeben sich durch die Gestaltungsfreiheit der Projektion weitere Merkmale, Vorteile und Anwendungen bezüglich unterschiedlicher Parameter, wie sie nachfolgend ohne einschränkenden Charakter aufgeführt werden:
- Form z.B. zur Vorverzerrung des Musters z.B. mittels Homographie, um eine verzerrungsärmere und damit besser durch die Kamera wandelbare Projektion auf einer Oberfläche zu erlangen;
- Ort der Projektion z.B. in Form einer die Umgebung abscannenden Vorrichtung, um z.B. Zusatzinformationen wie Tiefensprünge zu erkennen;
- Spektrum z.B. zur Erhöhung des Kontrastes zwischen den punktsymmetrischen Mustern und der Textur der Projektionsfläche oder zur Minimierung der aufzuwendenden elektrischen Leistung im Sinne eines sparsamen Umgangs mit Ressourcen
   - Sichtbar, Infrarot, Farbe/Monochrom/Schwarz-Weiß
- Modulation / Zeitverhalten
   - Grob-zu-Fein-Ansatz, z.B. um Detektionsentfernung und Detektionsgenauigkeit des Musters auszutarieren, z.B. bei Annäherungsvorgängen,
   - Leistung entfernungsabhängig steuern, z.B. um mit möglichst wenig Leistung trotzdem eine hohe Detektionsgüte zu erhalten,
   - Aufprägen/Codierung von Zusatzinformation z.B. zur Kommunikation eines anderen Systems mit der Kamera oder zwischen mindestens zwei Systemen mit Kamera- und Projektoreinheit.
- Intensität, z.B. um ein gleichmäßiges Beleuchtungsbild zur Neutralisierung der Textur der Projektionsfläche zu erzeugen, siehe Abschnitt 2.4.6, oder um die Methode invariant zur Umgebungsbeleuchtung zu realisieren (z.B. aktive Beleuchtung bei Nacht);
- Polarisation, z.B. um die Erfassung der Muster unabhängig von z.B. Farbe, Helligkeit, Textur, oder Reflexionseigenschaften der Projektionsfläche zu machen, und zwar mit Hilfe von Polarisationsfiltern vor Kamera und Projektor,
- Unsichtbarkeit/Nicht-Interpretierbarkeit des Musters für Menschen oder maschinelle Erfassungssysteme (der Zweck kann kaschiert werden)
   - Objekterkennung und -vermessung mit einer stationären Straßenlaterne oder Überwachungskamera;
   - Verdeckte/versteckte Kommunikation/Codierung (z.B. unsichtbarer QR-Code),
   - Objekterkennung und Straßenoberflächenvermessung mit einer bewegten Anordnung.

Weitere mögliche Ausgestaltungen und Merkmale, welche mit der obigen Offenbarung kombiniert werden, werden nachfolgend wiedergegeben, ohne dass eine einschränkende Wirkung durch diese Offenbarung entsteht:
Der Aufbau besteht im Wesentlichen aus einem aktiven Teil, dem Projektor, und einem passiven Teil, der Kamera, die optional miteinander zeitlich synchronisiert kommunizieren. Für die 3D-Vermessung ist es vorteilhaft, wenn die Positionierung der Kamera relativ zum Projektor fest und bekannt ist. Ein Punkt des Musters, der von dem Projektor erzeugt und von der Kamera im Bild beobachtet wird, kann dann über Triangulationsmethoden im Raum dreidimensional verortet werden. Für eine genaue Auswertung muss das Gesamtsystem die intrinsische Kalibrierung von Projektor als auch Kamera kennen. Diese Kalibrierung beschreibt die Relation von 2D Punkt im Bild zu 3D-Sichtstrahl. Ist jedoch eine Kalibrierung bekannt (z.B. Kamera), kann der Projektor bzw. die Kamera auch automatisch anhand eines projizierten z.B. äquidistanten Grid-Musters kalibriert werden. Solche Methoden sind im Allgemeinen bekannt. Die hier vorgeschlagene Methode konzentriert sich auf die spezielle Kodierung und robuste Detektion dieser projizierten Punkte und deren Anwendung: Das Grid-Muster ist also aufgebaut aus ungeraden und geraden punktsymmetrischen Bereichen, wobei die Punktsymmetriezentren auf einem äquidistanten Raster liegen können.

Das Funktionsprinzip kann dabei auf verschiedene Weisen implementiert werden. In einem einfachen Ausführungsbeispiel geschieht die Projektion mit nur einem codierten (z.B. farb- und intensitätsmodulierten) Punkt, der den Raum (bzw. die Raumwinkel) aber zeitlich "abscannt". Zu jedem Zeitpunkt erkennt und vermisst die Kamera diesen Punkt, um zum Beispiel die Entfernung in bestimmten Bereichen im Bild zu bestimmen. Dabei ist es nicht nur möglich, die Entfernung und somit die 3D Position des projizierten Punktes relativ zur Kamera zu bestimmen, sondern auch in grobem Maße die relative Orientierung der Oberfläche, auf die dieser Punkt projiziert wurde. Diese Orientierung kann durch eine Analyse der Beiträge zum Voting-Peak ermittelt werden, und zwar mittels einer 2D Eigenwertberechnung der Kovarianzen der zugehörigen Voting-Zentren. Dabei wird ausgenutzt, dass z.B. ein kreisförmiger punktsymmetrischer Bereich unter schräger Perspektive als etwa elliptischer punktsymmetrischer Bereich erscheint, dessen Ellipsenparameter Auskunft über die Orientierung der Ebene liefern. Dieses Szenario könnte zum Beispiel für mobile Roboter eingesetzt werden, um sich adaptiv voranzutasten oder in bekannten Räumen zu lokalisieren. Abhängig von der Auflösung der Kamera bzw. des Projektors kann eine beliebige Anzahl solcher Punkte gleichzeitig erzeugt und vermessen werden. Dabei bestimmt die Dichte der Punkte die räumliche Abtastrate. Alternativ kann diese durch eine alternierende Verschiebung des Rasters erhöht werden, um eine Unterabtastung (Undersampling) zu vermeiden.
Eine weitere Anwendung der 3D-Vermessung ist die indirekte Referenzmuster-Generierung. Dabei wird mit dem Projektor ein gleichmäßiges Raster von punktsymmetrischen Bereichen auf einer vorzugsweise planaren Oberfläche erzeugt und mit der fest verbauten kalibrierten Kamera dreidimensional vermessen. Dann wird dieses Muster so adaptiert, dass alle Punkte auf eine feste Position auf der 3D-Oberfläche (z.B. Raster mit 10cm Abstand) fallen. Dieser Schritt wird als Rektifizierung bezeichnet (Entzerrung). Nun kann dieses Muster als Kalibriertarget für andere - unter Umständen frei bewegliche - passive Kamerasysteme genutzt werden, die sich mittels dieses projizierten Musters lokalisieren und auch online kalibrieren können. Vorteil dabei ist, dass für das passive Kamerasystem nur eine monokulare Kamera nötig ist, um den Abstand zum projizierten Kalibriertarget zu bestimmen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine perspektivische Darstellung einer Anordnung bei der Ausführung eines erfindungsgemäßen Verfahrens;
- Figur 2: eine alternative Anordnung bei der Ausführung eines erfindungsgemäßen Verfahrens;
- Figur 3: eine exemplarische Draufsicht auf eine Projektion einer Vielzahl punktsymmetrischer Muster in Form von Rauschmustern;
- Figur 4: die in Figur 3 gezeigte Darstellung mit optischer Hervorhebung der punktförmigen Rauschmuster;
- Figur 5: eine perspektivische Darstellung einer erfindungsgemäßen Vorrichtung in Form einer Straßenbeleuchtung;
- Figur 6: eine perspektivische Darstellung einer erfindungsgemäßen mobilen Vorrichtung in Form eines Fortbewegungsmittels;
- Figur 7: eine schematische Darstellung einer Projektion durch ein erfindungsgemäßes Verfahren auf einer Oberfläche mit Tiefensprung;
- Figur 8: ein Flussdiagramm veranschaulichend Schritte eines Ausführungsbeispiels eines erfindungsgemäßen Verfahrens,
- Figur 9: eine alternative Ausgestaltung eines punktsymmetrischen Musters zur Erhöhung der Informationsdichte; und
- Figur 10: eine weitere alternative Ausgestaltung eines punktsymmetrischen Musters zur Erhöhung der Informationsdichte.

### Ausführungsformen der Erfindung

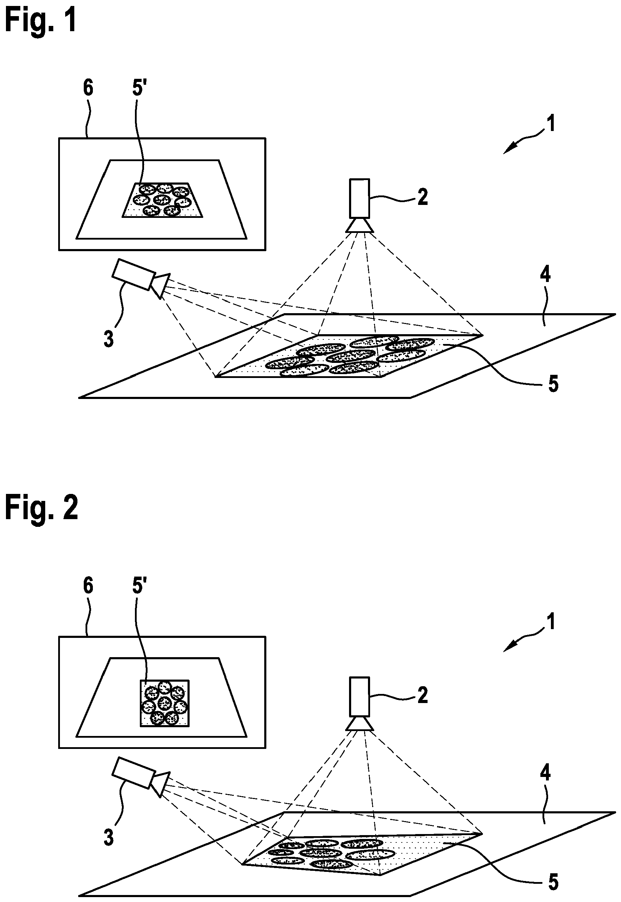

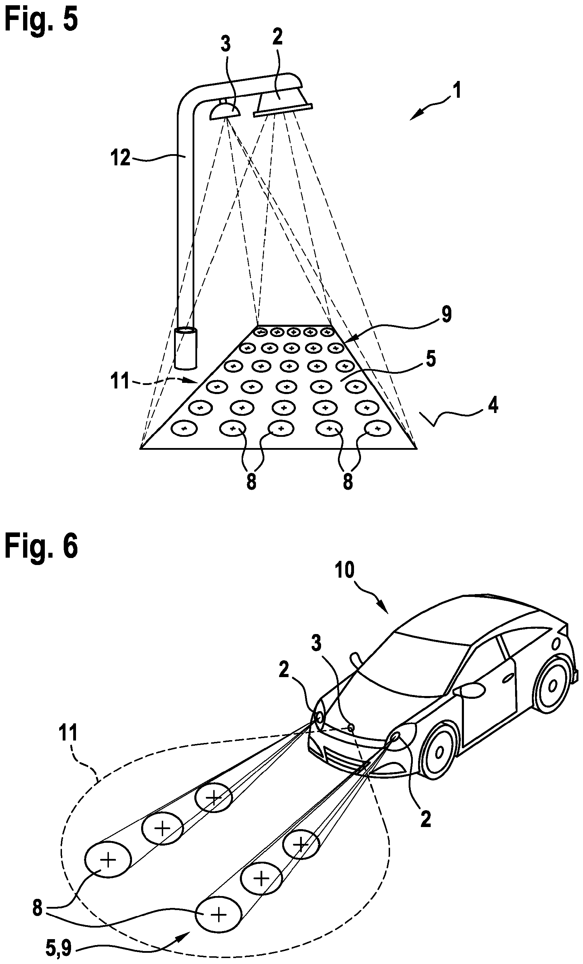

Figur 1 zeigt eine perspektivische Ansicht einer schematischen Anordnung einer Vorrichtung 1 zur Ausführung eines erfindungsgemäßen Verfahrens ohne Vorverzerrung im Projektor 2. Der Projektor 2 der Vorrichtung 1 projiziert auf eine senkrecht gelegene Oberfläche 4 eine Projektion 5 umfassend eine Vielzahl punktsymmetrischer Muster. Die Kamera 3 der Vorrichtung 1 ist hierbei in einem spitzen Winkel zur Oberfläche 4 angeordnet, so dass sich das Kamerabild 6 mit einer verzerrten Abbildung 5' der Projektion 5 ergibt.

Aufgrund der Tatsache, dass die Projektionsfläche nicht senkrecht auf der optischen Achse der Kamera 3 steht (verletzte Frontoparallelität), erfasst die Kamera 3 das Muster verzerrt. Die Detektion des Musters wird bei steigender verletzter Frontoparallelität erschwert, teilweise sogar unmöglich. Die Symmetrieeigenschaften des Musters durch die Verzerrung werden reduziert.

Figur 2 zeigt die in Figur 1 gezeigte Anordnung für den Fall, dass der Projektor 2 der Vorrichtung 1 eine Vorverzerrung des zu projizierenden Bildes vornimmt. Auf diese Weise ergibt sich das Kamerabild 6 mit einer darin enthaltenen rechteckigen Abbildung 5' der Projektion 5. Diese Korrektur zur Abmilderung der Auswirkung der verletzten Frontoparallelität ermöglicht eine robuste Detektion. Die Verzerrung des zu projizierenden Musters entspricht der Homografie zwischen Kamera 3 und Projektionsfläche 4. Die Kamera 3 kann dann ein unverzerrtes Muster mit erhaltenen Symmetrieeigenschaften erfassen.

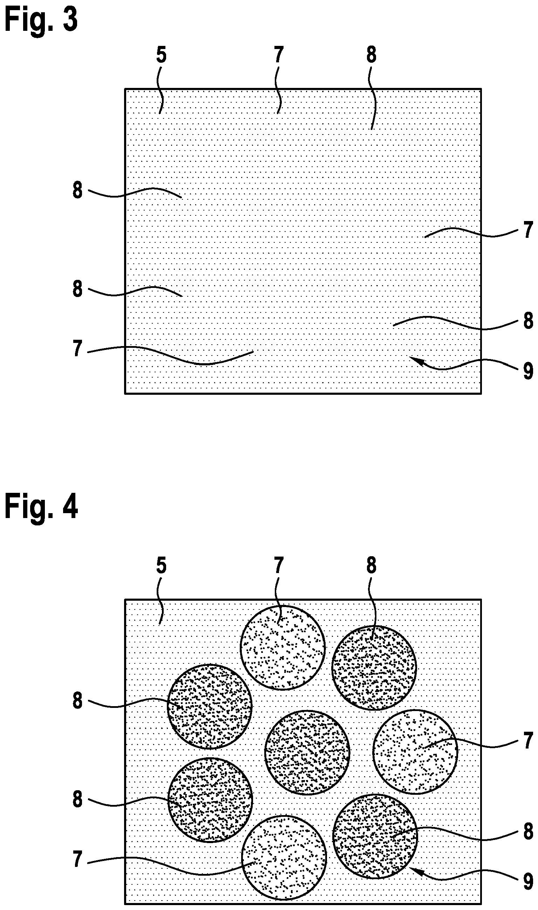

Figur 3 zeigt eine mögliche optische Erscheinung eines projizierten Musters, in welchem für das menschliche Auge nicht optisch erkennbare punktsymmetrische Muster 7, 8 enthalten sind. Die Projektion 5 könnte beispielsweise als "Rauschmuster" ausgeführt sein. Statt eines Rauschmusters kann auch ein anderes Muster mit Zufallscharakter verwendet werden, das nicht optisch erkennbare punktsymmetrische Muster 7, 8 enthält, beispielsweise ein Muster, das aussieht wie ein Bild von Schüttgut, z.B. von Reiskörnern, Sandkörnern, Bohnen, Erbsen, Steinen, Haaren, Fasern, Holzschnitzeln, Buchstabennudeln, oder wie ein Bild von Gras, Haut, Leder, Filz, Wasserwellen, usw. Derartige punktsymmetrische Muster sind hardware- und softwaretechnisch äußerst einfach zu erzeugen. Eine solche Darstellung hat den Vorteil, dass die optische Erscheinung nicht durch optisch erkennbare punktsymmetrische Muster für den Menschen erkennbar markiert wird.

Figur 4 zeigt die in Figur 3 gezeigte Darstellung durch für den Menschen optisch erkennbare Markierung der punktsymmetrischen Muster 7, 8. Die Vielzahl 9 punktsymmetrischer Muster 7, 8 besteht aus einem zentralen punktsymmetrischen Muster 8, welches durch sieben punktsymmetrische Muster 7, 8 im Wesentlichen äquidistant umgeben sind. Es existieren aber sehr viele alternativen Möglichkeiten für die Gestaltung der Punktsymmetrien, die sich ebenfalls für die Auswertung eignen. In diesem Zusammenhang sei auch auf die frühere Patentanmeldung DE 10 2020 214 248 verwiesen.

Figur 5 zeigt ein Ausführungsbeispiel für eine stationäre Anordnung. Hier sind Projektor 2 und Kamera 3 starr an einem Laternenmast 12 befestigt. Beide weisen einen gewissen Abstand zueinander auf. Der Projektor 2 projiziert eine Projektion 5 umfassend eine Vielzahl 9 symmetrischer Muster 8 auf den Boden 4 (z.B. Asphalt) bzw. auf die darauf stehenden oder sich bewegenden Objekte (z.B. Verkehrsteilnehmer, insbesondere Fahrzeuge). Die projizierten Muster 8 sind jeweils punktsymmetrisch. Die Kamera 3 ist so ausgelegt und eingerichtet (Blickrichtung, Erfassungsbereich, Auflösung, Empfindlichkeit), dass sie die Projektion 5 gut erfassen kann. Befindet sich ein Objekt auf dem Boden 4, so verändert sich die von der Kamera 3 erfasste Anordnung der punktsymmetrischen Muster 8 bzw. ihrer Symmetriezentren gegenüber dem Zustand mit leerer Szene.

Beispielsweise würde das Vorhandensein eines Autos innerhalb des Projektionsbereichs 11 dazu führen, dass ein Teil der Symmetriezentren im Bild der Kamera 3 verschoben erscheint. Je näher der Teil des Autos (z.B. Autodach gegenüber der Motorhaube) der Kamera 3 ist, umso größer ist die Verschiebung (Disparität). Mit der Anordnung 1 können also Präsenz, Umriss, Höhe, und sogar 3D-Form des gegebenenfalls im Projektions- und Erfassungsbereich befindlichen Objekts ermittelt werden. Dies ist sogar auf untexturierten Flächen wie z.B. einem einheitlich weiß lackierten Autodach möglich.

Bei der Ausführung als Straßenlaterne spielt selbstverständlich auch die Beleuchtung als solche eine wichtige bzw. die wesentliche Rolle. Daher ist es sinnvoll, beide Zwecke miteinander zu kombinieren, also das projizierte Muster gleichzeitig als Beleuchtung (Straßenbeleuchtung) einzusetzen. Das ist mit heutigen, insbesondere auf LED-Technik basierenden, Projektionstechniken problemlos möglich. Statt gleichmäßiges Licht auszustrahlen, würde dieses das benötigte Muster mit den punktsymmetrischen Anteilen beinhalten und trotzdem den Zweck der Beleuchtung erfüllen. Besonders eignen sich dabei Lichtmuster wie sie in Figur 3 dargestellt sind, da diese trotz der enthaltenen Rauschtextur als vergleichsweise gleichmäßig wahrgenommen werden. Die Perzeption ist etwa diejenige, welche man im Halbschatten eines Tarnnetzes hat.

Das projizierte Rauschmuster kann auch schnell verändert werden, z.B. 100 mal in der Sekunde bzw. z.B. mit 50 Hz. Dabei kann beispielsweise sichergestellt werden, dass die Symmetriezentren jeweils ihre Position beibehalten, obwohl sich ihr Aufbau und ggf. auch ihr Symmetrietyp (ungerade/gerade) verändert. Dies kann unterschiedliche Vorteile bzw. Nutzen mit sich bringen, z.B.
- das Muster wird aufgrund der trägen Integration im Auge anders wahrgenommen (z.B. als angenehme Lichtdusche oder gar also konstante Beleuchtung),
- es können wechselnde Codierungen verwendet werden, z.B. um kooperativ Daten optisch an ein System mit Kamera zu senden,
- es können im Gegenteil auch Informationen gegenüber nichtkooperativen Systemen versteckt werden.

Das projizierte Rauschmuster kann aber auch so gestaltet sein, dass die Symmetriezentren ihre Positionen zeitlich verändern. Dies kann Vorteile bei der 3D-Vermessung bringen, insbesondere, wenn an diesen ausgezeichneten Positionen die Messgenauigkeit oder Robustheit besonders hoch ist.

Figur 6 zeigt ein Ausführungsbeispiel für eine bewegte Anordnung, umfassend einen PKW 10 als Fortbewegungsmittel. Dieser weist zwei Projektoren 2 in Form von Scheinwerfern auf. Diese projizieren andere punktsymmetrische Muster 8 auf die Straßenoberfläche vor dem PKW 10. Auch hier kann gleichzeitig wieder der Zweck der Beleuchtung des Fahrzeugumfeldes miterfüllt werden. Eine Kamera 3 in der Fahrzeugfront beobachtet das Abbild der Projektionen 5 der Vielzahl punktsymmetrischer Muster 8. Anschließend wird das Abbild fahrzeugbasiert ausgewertet. Dabei können unterschiedliche Zwecke verfolgt werden, z.B.
- fortlaufende Erfassung des Bereichs vor den eigenen Rädern, also die in Kürze von den Rädern überrollten Streifen der Straße, um diese zu vermessen. Hierbei ist insbesondere die Vermessung der Höhenprofile der überrollten Streifen rechts und links von Interesse, z.B. um ein adaptives Fahrwerk dynamisch daran anpassen zu können. Ähnliche Systeme sind bekannt, jedoch sicher nicht mit punktsymmetrischen Mustern und vermutlich nicht mit gleichzeitiger Beleuchtungsfunktion.
- Detektion, Vermessung und formbasierte Klassifikation von Hindernissen, die sich auf der Fahrbahn befinden, um Schäden zu vermeiden. Befindet sich ein Hindernis auf der Fahrbahn, so verändert jeder davon betroffene punktsymmetrische Bereich im Bild (im Vergleich zum Fall ohne Hindernis) seine Position und ggf. auch seine Form. Dies kann ausgewertet werden, um das Hindernis automatisch zu erfassen und darauf zu reagieren, z.B. zu bremsen oder ein Anfahren zu verhindern.
- Optische Informationsübertragung an benachbarte Fahrzeuge mit selber oder entgegenkommender Fahrtrichtung, deren Kameras Blick auf das projizierte Muster haben und darin mitenthaltene Codierungen erfassen und auswerten, z.B. um darauf reagieren zu können.

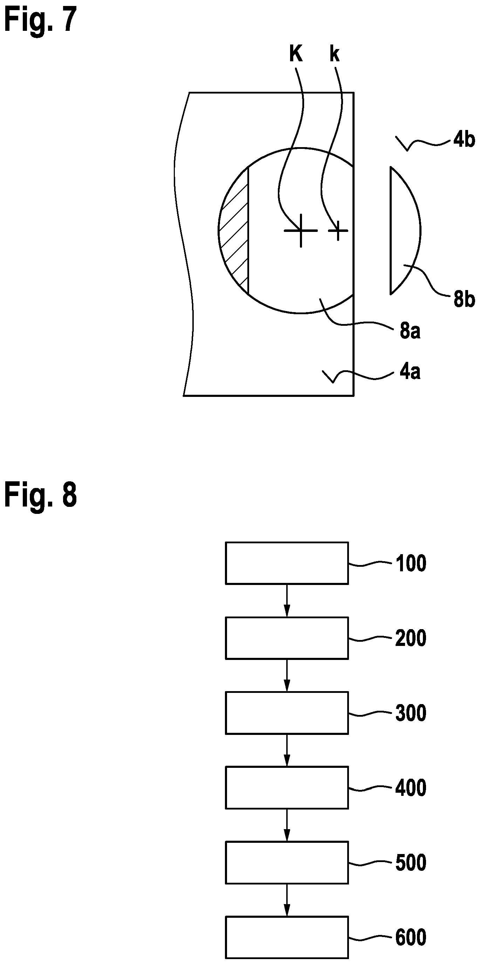

Figur 7 zeigt eine schematische Darstellung einer erfindungsgemäßen Projektion eines punktsymmetrischen Musters 8, welches einen kreisförmigen punktsymmetrischen Bereich umfasst und auf einen Tiefensprung fällt. Mit anderen Worten ist zwischen der Oberfläche 4a und der Oberfläche 4b ein Tiefensprung (z.B. beispielsweise entsprechend einem Autodach und einer Motorhabe desselben Fahrzeugs). Anders ausgedrückt zerfällt der von der Kamera beobachtete kreisförmig Bereich dabei in zwei Kreissegmente 8a, 8b. Das größere Kreissegment 8a fällt hier auf den Vordergrund (z.B. eine flache Wand im Vordergrund) und das kleine Kreissegment 8b auf den Hintergrund (z.B. eine zur vorderen Wand parallele Wand im Hintergrund). Bei der Auswertung der Symmetrien mit dem Voting-Verfahren entstehen in dieser Situation zwei Peaks (ausgeprägte Häufungspunkte), die zwei Symmetriezentren entsprechen und hier mit Kreuzen gekennzeichnet sind. Das kleine Kreuz k ist das schwächere Symmetriezentrum, welches aus dem kleinen Kreissegment rechts und dem gestrichelten, dazu punktsymmetrischen Gegenstück links hervorgerufen wird. Das große Kreuz ist das stärkere Symmetriezentrum, das aus dem großen Kreissegment ohne den gestrichelten Bereich hervorgerufen wird.

Das normalerweise einzige Symmetriezentrum zerfällt in diesem Beispiel also in zwei Symmmetriezentren, wenn ein Tiefensprung vorliegt. Aus dieser Tatsache bzw. gemäß diesem Prinzip lassen sich Zusatzinformationen gewinnen, z.B., dass ein Tiefensprung vorliegt und wo ungefähr dieser sich befindet. Würde der Tiefensprung sich weiterbewegen, z.B. langsam nach links, so würde das starke Symmetriezentrum schwächer werden und das schwache Symmetriezentrum stärker. Aus dem Verhältnis der beiden Peak-Gewichte und aus der Anordnung der Peak-Positionen (die eine Linie bilden) lassen sich also schon nützliche Zusatzinformationen ermitteln, hier z.B. konkret die Lage und die Orientierung der Tiefensprung-Kante. Statt den Tiefensprung zu bewegen, kann man auch den projizierten symmetrischen Bereich bewegen und die Szene im Sinne eines Scanners abtasten.

Wenn die Tiefe sich nicht sprungartig ändert, sondern z.B. stetig aber nichtlinear, dann ändert der Peak seine Form. Statt eines spitzen, hohen, ungerichteten Peaks entsteht dann ein in die Länge gezogener niedrigerer Peak. Seine Ausrichtung verrät dabei die Richtung der Veränderung. Aus diesen Betrachtungen wird verständlich, dass aus Veränderungen des Peaks im Vergleich zum Normalfall nützliche Zusatzinformationen über die Szene gewonnen werden können.

Bei Bedarf können aber noch wesentlich genauerer Informationen ermittelt werden: Dafür kann zu jedem gefundenen Peak nachträglich ermittelt werden, welche symmetrischen Signaturpaare zu seiner Entstehung beigetragen haben, also ein entsprechender Rückschluss gezogen werden. Dies erfolgt vorteilhafterweise in einem zweiten Durchlauf, der ähnlich abläuft wie das Voting selbst, wobei allerdings die jeweilige Peak-Position schon bekannt ist. Wird bei diesem zweiten Durchlauf festgestellt, dass ein Signaturpaar zum betrachteten Peak beitragen würde (bzw. beim ersten Durchlauf schon beigetragen hat), kann dieses Signaturpaar markiert werden, z.B. durch Vergeben eines dem Peak zugeordneten Labels (Identifikationsnummer) an die beiden Signaturpixel. Auf diese Weise entsteht ein Label-Bild, bei dem alle Pixel, die zu einem bestimmten Peak beigetragen haben, dasselbe Label besitzen.

Für den zum großen Kreuz K in Figur 7 gehörenden Peak würde man beispielsweise anhand der vergebenen Label feststellen, dass das große Kreissegment ohne den schraffierten Bereich dazu beigetragen hat. Die Information über das Vorhandensein einer Kante (am Tiefensprung) ist darin implizit enthalten. Ob die Kante rechts oder links vom Peak liegt, ist daraus allerdings noch nicht abzulesen. Bei der oben beschriebenen scannenden Variante ist diese Mehrdeutigkeit aber leicht auflösbar, denn im nächsten Zeitschritt läge die rechte (richtige) Kante immer noch an derselben Stelle, während sich die linke (vermeintliche) Kante doppelt so weit nach rechts bewegt hätte wie das Symmetriezentrum.

Figur 8 zeigt Schritte eines Ausführungsbeispiels eines erfindungsgemäßen Verfahrens zur optischen Analyse einer Oberfläche. Die Analyse kann der Oberflächengestalt und/oder Lage und/oder Ausrichtung dienen. In Schritt 100 wird eine erste Vielzahl punktsymmetrischer Muster auf die Oberfläche projiziert. Dies kann beispielsweise durch einen LED-basierten Projektor erfolgen, welcher eine Blende nach Art eines Beamers aufweist. In Schritt 200 wird die Projektion bzw. das von der Oberfläche reflektierte Licht des Projektors mittels eines optischen Sensors optisch erfasst, um erste Daten (Sensordaten) zu erstellen. Anschließend wird eine Beschaffenheit der Oberfläche anhand der ersten Daten analysiert. Anhand der in den ersten Daten repräsentierten punktsymmetrischen Mustern kann die Lage, die Form, eine etwaige Bewegung erkannt werden. Um zusätzliche (nicht originär optische) Daten vom Projektor an den optischen Sensor zu kommunizieren, kann das Verfahren wie folgt weitergebildet werden:
In Schritt 400 wird ermittelt, dass Daten in der Projektion, insbesondere durch Codierung der ersten Vielzahl punktsymmetrischer Muster, vorliegen. Beispielsweise kann diese Information eine Referenz zur Analyse des ausgesandten Lichts kennzeichnen. Beispielsweise kann ein Speicherbereich oder eine anderweitige Kennzeichnung einer aktuellen oder zukünftigen Projektion zugeordnete Referenz durch die zu codierenden Daten benannt werden. Diese Daten können sensorseitig verwendet werden, um die punktsymmetrischen Muster zu untersuchen bzw. für die Analyse der Beschaffenheit der Oberfläche zu verwenden.

In Schritt 500 werden eine vordefinierte und/oder veränderte Länge einer Projektionsstrecke sowie eine vordefinierte und/oder veränderte Umgebungslichtintensität ermittelt. Dies kann beispielsweise durch eine Bewegung der zu analysierenden Oberfläche und/oder durch veränderte Wetterbedingungen verursacht sein. Im Ansprechen darauf wird eine für die Projektion aufgewandte Energie angepasst. Mit anderen Worten wird die Intensität und/oder Intensitätsverteilung und/oder Wellenlänge der Projektion derart angepasst, dass die Erkennung der projizierten punktsymmetrischen Muster mit im Wesentlichen unveränderter Sicherheit/Wahrscheinlichkeit fortgesetzt werden kann, obwohl sich die Umgebungsbedingungen bzw. die räumlichen Beziehungen zwischen Oberfläche, Projektor und Sensor verändert haben.

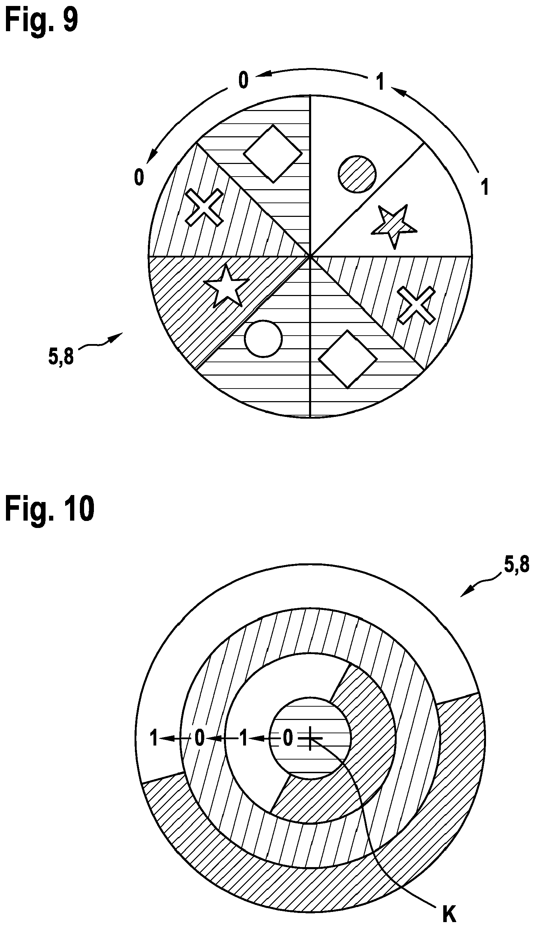

Figur 9 zeigt eine Projektion 5 eines punktsymmetrischen Musters 8 mit erhöhter Informationsdichte, in welcher nicht nur pro punktsymmetrischem Muster 1 Bit, sondern ein ganzes Wort (mehrere Bits) codiert werden können. Hierzu codiert jedes einzelne Voting-Paar, welches zum Symmetriezentrum beigetragen hat, ein Bit. In der in Figur 9 dargestellten Projektion 5 sind jeweils einander gegenüberliegende Muster (Raute, Punkt, Stern und Kreuz) enthalten, welche vier codierten Bits (Wort 11002 = 1210) entsprechen. Dabei werden ungerade und gerade Punktsymmetrien im Muster gemischt, wobei pro Paar immer nur 1 Bit an Informationen repräsentiert werden kann (dadurch kann nur der Halbkreis genutzt werden).

Dies erfordert nur eine minimale Änderung zum vorher beschriebenen Punktsymmetriemuster und bedeutet, dass für ein Symmetriezentrum sowohl ungerade als auch gerade Symmetriepaare stimmen (d.h. es werden keine negativwertigen Votes verwendet). Dabei sind verschiedene Ausführungsformen denkbar:
1. In einer ersten Ausfertigung ist die Anordnung der einzelnen Votes beliebig (alle Permutationen der Voting Bits), und es können keine Positionen für die Extra-Bits bestimmt werden, sondern nur die Anzahl an geraden und ungeraden Votes. Deren Verhältnis kann jedoch quantisiert in eine Zahl umgewandelt werden (z.B. 0-7, entsprechend drei Bits).
2. In einer alternativen Ausfertigung werden die Voting-Paare radial um das Voting-Zentrum (der Symmetriepunkt) mit ansteigendem Winkel sortiert und bekommen somit "Bit-Positionen" zugewiesen. Dabei kann die Startposition entweder explizit durch ein sich nicht wiederholendes Muster codiert (z.B. 000) oder über die Lage relative zu den Nachbarsymmetrien oder eine Kombination aus beidem bestimmt werden.
3. In einem vorteilhaften Sonderfall von Punkt 1 sind ein gerader punktsymmetrischer und ein ungerader punktsymmetrischer Bereich kreis- bzw. ringförmig konzentrisch angeordnet. Das Verhältnis ihrer Flächenanteile führt dann wieder zu einem messbaren Verhältnis von Gewichten, das als Zahl quantisiert werden kann (z.B. 0-7, entsprechend drei Bits).

Figur 10 zeigt eine alternative Ausgestaltung einer Projektion 5, umfassend ein punktsymmetrisches Muster. Dieses Muster weist vier konzentrische Bereiche auf, die entweder gerade punktsymmetrisch (0) oder ungerade punktsymmetrisch (1) bezüglich des gemeinsamen Symmetriezentrums (K) sind. Die Auslesereihenfolge ist fest, z.B. von innen nach außen. Hierbei ist anhand der Abfolge der Symmetrieformen das Wort 1010 binär mit 4 Bit codiert, das der Dezimalzahl 10 entspricht. Bei diesem Verfahren ist es aber von Vorteil, zusätzliche Redundanz in der Information zu codieren, um evtl. Decodierungsfehler erkennen und korrigieren zu können.

## Patentansprüche

1. Verfahren zur optischen Analyse einer Oberfläche (4) umfassend die Schritte:
- Projizieren (100) einer ersten Vielzahl punktsymmetrischer Muster (7, 8) auf die Oberfläche (4),
- Optisches Erfassen (200) der Projektion (5) mittels eines optischen Sensors (3) zur Erstellung erster Daten und
- Analysieren (300) einer Beschaffenheit der Oberfläche (4) anhand der ersten Daten.

2. Verfahren nach Anspruch 1, wobei die Vielzahl (9) punktsymmetrischer Muster (7, 8) ein erstes, insbesondere mehrfach vorkommendes erstes punktsymmetrisches Muster (7) und ein zum ersten Muster (7) unterschiedliches zweites Muster (8) enthält.

3. Verfahren nach Anspruch 1 oder 2, wobei das punktsymmetrische Muster (7, 8) eine kreisförmige oder polygonförmige oder eckige, insbesondere rechteckige, bevorzugt quadratische oder sechseckige, äußere Begrenzungslinie aufweist.

4. Verfahren nach einem der vorstehenden Ansprüche, wobei sämtliche Merkmale und/oder Linien des punktsymmetrischen Musters (7, 8) eine gerade und/oder ungerade Punktsymmetrie bezüglich eines gemeinsamen Symmetriepunktes aufweisen.

5. Verfahren nach einem der vorstehenden Ansprüche, wobei das punktsymmetrische Muster (7, 8) eine verrauschte, optische Erscheinung, insbesondere ein Rauschmuster, aufweist.

6. Verfahren nach einem der vorstehenden Ansprüche weiter umfassend die Schritte
- Projizieren einer zweiten Vielzahl punktsymmetrischer Muster (7, 8) auf die Oberfläche (4), welche sich insbesondere
- hinsichtlich der punktsymmetrischen Muster (7, 8) und/oder
- hinsichtlich der Positionen und/oder Ausrichtungen von der ersten Vielzahl (9) punktsymmetrischer Muster (7, 8) unterscheidet,
- Optisches Erfassen der Projektion (5) der zweiten Vielzahl punktsymmetrischer Muster (7, 8) mittels des optischen Sensors (3) zur Erstellung von zweiten Daten und
- Analysieren einer Beschaffenheit der Oberfläche (4) anhand der ersten Daten und der zweiten Daten.

7. Verfahren nach einem der vorstehenden Ansprüche weiter umfassend die Schritte
- Ermitteln (400) einer in der Projektion (5) zu codierender Daten und
- Variieren der ersten Vielzahl (9) punktsymmetrischer Muster (7, 8) entsprechend der zu codierenden Daten.

8. Verfahren nach Anspruch 7, wobei die zu codierenden Daten
- einen Speicherplatz und/oder
- eine Referenz zur Verwendung bei der Analyse und/oder
- eine an einen vordefinierten Empfänger zu übermittelnde Nachricht und/oder
- eine an beliebige unbestimmte Empfänger zu übermittelnde Nachricht repräsentieren.

9. Verfahren nach einem der vorstehenden Ansprüche, wobei das Analysieren der Beschaffenheit der Oberfläche (4) anhand der ersten Daten weiter die Schritte umfasst:
- Ermitteln einer Symmetrie in der ersten Vielzahl (9) punktsymmetrischer Muster (7, 8) und in Abhängigkeit der Symmetrie
- Ermitteln einer der ersten Vielzahl (9) punktsymmetrischer Muster (7, 8) zugeordneten Referenz.

10. Verfahren nach einem der vorstehenden Ansprüche, wobei die erste Vielzahl (9) punktsymmetrischer Muster (7, 8)
- mittels einer statischen Maske und/oder
- mittels einer zeitveränderlichen Maske
erzeugt wird.

11. Verfahren nach einem der vorstehenden Ansprüche weiter umfassend
- Ermitteln einer vordefinierten Erstreckung und/oder Lage der Oberfläche (4) und in Abhängigkeit einer vordefinierten zweiten Referenz
- Vorverzerren der Projektion (5) zur Erzeugung der ersten Vielzahl (9) punktsymmetrischer Muster (7, 8) auf der Oberfläche (4).

12. Verfahren nach einem der vorstehenden Ansprüche, wobei die Projektion (5)
- sichtbares Licht und/oder
- Infrarot-Licht und/oder
- schmalbandiges Licht und/oder
- ultraviolettes Licht,
insbesondere ausschließlich, umfasst.

13. Verfahren nach einem der vorstehenden Ansprüche weiter umfassend die Schritte
- Ermitteln (500) einer vordefinierten und/oder veränderten
- Länge einer Projektionsstrecke und/oder
- Umgebungslichtintensität, und im Ansprechen darauf
- Anpassen einer Detailtiefe der Projektion (5) der ersten Vielzahl (9) punktsymmetrischer Muster und/oder
- Anpassen (600) einer für die Projektion (5) aufgewandten Energie.

14. Verfahren nach einem der vorstehenden Ansprüche, wobei
- das Projizieren durch eine Verkehrsinfrastruktureinrichtung, insbesondere zur Straßenbeleuchtung (12) oder durch ein, insbesondere autonom fahrendes, Fortbewegungsmittel ausgeführt wird und/oder
- der optische Sensor (3) an einer Verkehrsinfrastruktureinrichtung, insbesondere an einer Einheit zur Straßenbeleuchtung (12), und/oder einem, insbesondere autonom fahrenden, Fortbewegungsmittel angeordnet ist.

15. Vorrichtung umfassend
- einen Projektor (2),
- einen optischen Sensor (3) und
- eine Auswerteeinheit, wobei die Vorrichtung (1) eingerichtet ist, ein Verfahren nach einem der vorstehenden Ansprüche auszuführen.
